# EUROPEAN PATENT APPLICATION

(11) **EP 0 637 767 A2**
(43) Date of publication of application: **08.02.1995**
(21) Application number: 94304757.1
(22) Date of filing: 29.06.1994
(51) Int. Cl.: G02B 6/44

(54) **An enclosure for multifilament cables**

(30) Priority: 08.07.1993 GB 9314091
(71) Applicant: WALTER ROSE GmbH & Co. KG, D-58093 Hagen (DE)
(72) Inventor: Fremgen, Dieter, D-42489 Wulfrath (DE)
(74) Representative: Benson, John Everett

(57) **Abstract**

An enclosure, particularly for multifilament optical fibre splices, in which the enclosure (11) has a body (12) with a lid (13) hinged thereto to allow access to the splices. The hinges (24) allow translational movement as well as pivotal movement of the lid (13) so that an even pressure is exerted on any seal between the lid (13) and the body (12).

## Description

This invention relates to enclosures for multifilament cables, and is particularly, but not exclusively, concerned with enclosure for use with telecommunications cables.

Cable splice enclosures which house connectors and organizers for multifilament cables, and which comprise a body having cable inlet and outlet ports and a closure are known. For example such enclosures are described in DE-2626510-C, DE 3029848, DE-3320916 and DE-4142516.

The applicant has in G.9303790.2, filed in Germany on 15th March 1993, disclosed a cable enclosure in the form of a box like housing which is accessible through a lid which is hinged to the box like housing.

These types of enclosure may remain in the field for many years especially when in use in telecommunication systems, and the interior of the enclosure must remain accessible for repair and alteration of the system, and must be weather proof over such extended time periods.

The sealing material which is used for such enclosures should remain resilient over the extended time period and must not creep excessively under load. It is therefore advantageous if the sealant is subject to uniform loading during the closure of the lid as well as after the enclosure is sealed.

Accordingly there is provided an enclosure for multifilament cables having cable ports therein and which has a lid hinged to a body allowing access to the interior of the enclosure, characterised in that the hinge allows translational as well as pivotal movement of the lid relative to the body. Preferably each hinge comprises a hinge pin fixed to one of the lid and body and an elongate slot, within which the pin can rotate and slide, in the other of the lid and body. The slot preferably has a width substantially equal to the width of the pin (which is preferably of substantially circular cross-section), and extends in a direction substantially perpendicular to a substantially planar area at which the body and lid meet when the enclosure is closed. In the preferred arrangement the pin is fixed to the lid, and further may be held in a lug projecting from the lid so that hinge point is located externally of and spaced from the enclosure.

The preferred enclosure is a rectangular box-like enclosure with an opening lid which when used for an in-line splice enclosure in a telecommunications system will have cable ports at opposite ends of the enclosure.

The box may be held closed by means of at least one wedge shaped clamping element which forms part of a tongue and groove joint with tongue parts formed in the enclosure body and lid and the groove formed in the clamping element.

The lid may be sealed to the body by a sealing material such as a mastic, a gel, or an elastomer which may be in the form of a preformed sealing member such as a gasket or elongate beading such O-ring strips.

The invention will be described by way of example and with reference to the accompanying drawings in which:
Figure 1, shows an enclosure according to the present invention in a closed condition; and
Figure 2, shows the enclosure of Figure 1 in the open condition.

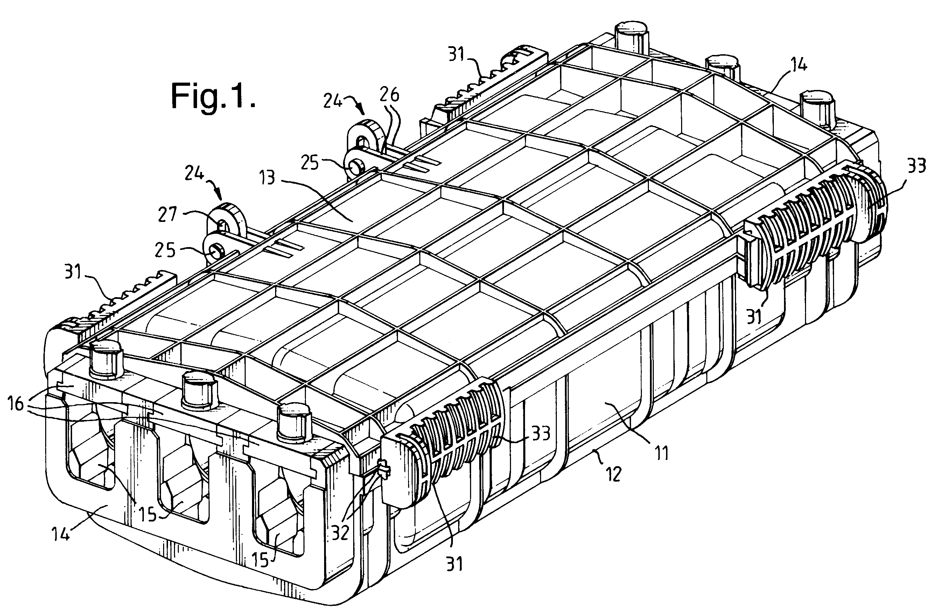

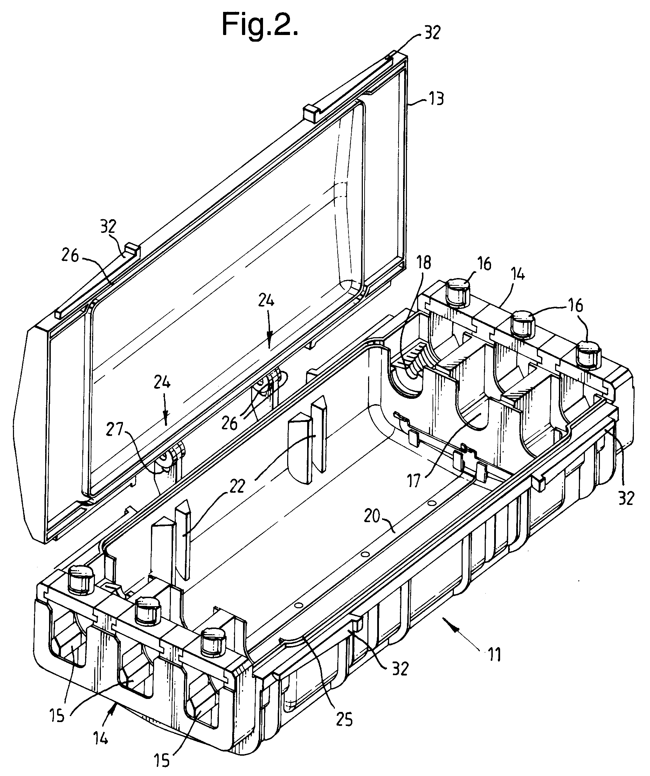

Now with reference to Figures 1 and 2, there is illustrated a multifilament cable closure 11 which is for use in telecommunications systems and in particular optical fibre systems.

The enclosure illustrated is an in-line splice enclosure but the invention is also applicable to butt splice enclosures.

The enclosure 11 is basically in the form of a rectangular box with box shaped body 12 with an openable and closable lid 13 hinged thereto at one side of the body 12.

The opposite end walls 14 of the enclosure body 12 have ports 15 therethrough for cables, particularly multifilament cables. The ports 15 are provided with a cable clamping means 16 adjacent the outer side of the housing which may be inserted into notches or dovetailed connectors on the ends of the body 12.

The ports 15 inwardly of the clamping means 16 have cavities 17 in which split, preformed seals 17 (only one half of which is shown) are located. The preformed seals 17 are split into two halves and are formed from a soft elastomeric material such as a lightly cross-linked silicone rubber or a gel material such as an oil-extended ethylene butadiene styrenes (SEBs) of the type sold by Shell under the trade name Kraton. In the preferred embodiment the preformed seals have a softer and/or tacky surface layer and an internal harder elastomeric part which can store energy when the enclosure is closed to ensure a good seal is maintained over long periods of time.

In some uses the enclosure may have an internal shield continuity strip, 20, and fixing elements 22 for various desired cable or conductor organizers or other inserts.

The lid 13 is hinged to the body 12 by a pair of spaced hinges 24 each of which comprises a hinge pin 25 fixed to the lid via a pair of hinges 15, and an elongated slot 27 in a hinge 28 fixed to said one side of the body 12 externally thereof.

The slots 27 extend substantially parallel to said one side of the body, that is vertically as shown.

The elongated slots allow translational as well as pivotal movements of the lid 13 relative to the body.

The lid 13 is sealed to the body by a seal interposed between peripheral surfaces 25, 26 on the body 12 and lid 13 respectively. The seals may comprise a bead of sealant, mastic, or a preformed gasket or a portion of extruded sealing bead.

The preferred sealing system is an elongate element consisting of an inner elastomeric element and an outer sealing, optionally, adhesive element. Such system may can comprise a silicone rubber having differing amounts of initiator e.g. peroxide material, in the inner and outer layers, or butyl rubber or compounds such as SEBs as discussed above.

Because the hinges 24 allow some limited upward translational movement, the whole lid 13 can be come down evenly across any sealing material thus ensuring that there is no premature loss or distortion of sealant from any particular area.

The lid 13 is secured to the body 12 in the locked condition by wedge clamping elements 31 located one at each corner of the enclosure and extending along the open edges of the lid and body. Other closure means, such as toggle clamps etc. could be used.

The wedge elements 31 each comprise a pair of aligned tongues 32 one being on the lid 13 and the other on the body 12, and clamp 33 having a groove therein. Surfaces of the tongues and respective grooves are inclined and cooperate so that as the clamp 33 is pushed onto the respective adjacent tongues 32, the lid is pulled onto the body 12.

The description relates to a specific embodiment of the invention and alternatives and modifications can be made thereto without departing from the scope and spirit of the invention.

## Claims

1. An enclosure for multifilament cables having cable ports therein and which has a lid hinged to a body allowing access to the interior of the enclosure, characterised in that the hinge allows translational as well as pivotal movement of the lid relative to the body.

2. An enclosure as claimed in claim 1 wherein each hinge comprises a hinge pin on one of the lid and body which engages in an elongate slot in the other of the lid and body.

3. An enclosure as claimed in claim 1 or 2 wherein each hinge pin is fixed to the lid.

4. An enclosure as claimed in any one of claims 1 to 3 having a plurality of spaced hinges at one side thereof.

5. An enclosure as claimed in any one of claims 1 to 4 wherein each hinge is located externally of and spaced from the body of the enclosure.

6. An enclosure as claimed in any one of claims 1 to 5 wherein the enclosure is of a generally rectangular shape.

7. An enclosure as claimed in any one of claims 1 to 6, wherein the lid is sealed to the body by means of an elongate sealing material comprising an elastomeric inner part and an adhesive outer part.

8. An enclosure as claimed in any one of claims 1 to 7 wherein the lid is held in a closed position by a wedge-shaped clamping element.

9. An enclosure as claimed in any one of claims 1 to 8 and which is a splice enclosure for multi-filament optical fibre cables.
